# EUROPEAN PATENT APPLICATION

(11) **EP 1 453 337 A1**
(43) Date of publication of application: **01.09.2004**
(21) Application number: 03425122.3
(22) Date of filing: 27.02.2003
(51) Int. Cl.: H04Q 7/36

(54) **Radio resource management method in cellular telephone networks based on interference reduction timeslot allocation and adaptive antenna array**

(71) Applicant: Siemens Mobile Communications S.p.A., 20126 Milano (IT)
(72) Inventor: Zirilli, Bruno, 20162 Milano (IT)

(57) **Abstract**

The Radio Resource Management (RRM) operates in a cellular network either of the 2^{nd} or 3^{rd} generation in order to bias TDMA traffic towards prefixed directions of sectored cells. The network is built up by replicating a network base element over a wide synchronised area. The base element includes one or more sectored cells either disjoint or superimposed to each other. The base stations exploit directive antennas able to cut out the gain for sectoring the cells and measuring the directions of arrival (DOA) of the users signals. The RRM plans the transmissions of the mobiles and the serving BTSs by allocating the available timeslots to sectors which don't overlap, as far as possible, the sectors of adjacent or superimposed cells during a same active timeslot. The last is also allocated to the users whose DOAs best match with the angular positions of the relevant sectors. A suitable configuration table is generated by mapping a subset of the possible allocations between cell/s, sectors, and timeslots. Starting from the selection of an initial configuration in the table, suitable spatial functions are generated to define the configurations of all the adjacent elements, in order to achieve maximum interference rejection. The relationships respect topological properties so that it can be repeated periodically in space (fig.18).

## Description

### FIELD OF THE INVENTION

The present invention relates to the field of the cellular telephone networks and more precisely to a radio resource management method in cellular networks based on interference reduction timeslot allocation.

### BACKGROUND ART

In a Public Land Mobile Network (PLMN) a wide geographical area is subdivided into service cells assigned to as many fixed stations connected via radio with several Mobile Stations (MS) in transit within the cells. The fixed stations are also named Base Stations (BS), Base Transceiver Stations (BTS), NODE B, in the following, while the MS is also termed User Equipment (UE) according to the 3^{rd} generation naming rules. Between the base stations and the mobile stations an on-air interface is defined for radio transmissions on the licensed frequency spectrum. The on-air interface includes a physical channel, conventionally said downlink, or direct link channel, for the transmissions from a BS to the MSs, and an uplink physical channel, or reverse link, for the transmissions from the MSs to the BS. The two physical channels are shared among a plurality of mobile stations having the care to keep the various transmissions distinct to each other. Known useful accessing techniques for this purpose are the following: FDMA (Frequency Division Multiple Access); TDMA (Time Division Multiple Access); CDMA (Code Division Multiple Access); and SDMA (Space Division Multiple Access). With the FDMA technique each user avails of its own frequency channel, not shared with any other user for all the time requested by the service; this case called SCPC (Single Channel Per Carrier) is typical of the first generation analogue systems. With the TDMA technique the carrier is assigned to different users at different times, called timeslots, that are forming repetitive frames. With the CDMA technique the carrier is assigned to more users at the same time, but the transmissions of each user are discriminated from the others by means of pseudo-noise orthogonal codes assigned on individual basis. Also with the SDMA technique the carrier is assigned to more users at the same time, but the transmissions of each user are discriminated from the others by means of the different Direction Of Arrivals (DOA) of the radio signals. In the same mobile system the above access techniques can be used separately or altogether to avail of possible synergies. The on-air interface of the 2^{nd} Generation GSM (Global System for Mobile communications) employs a mixed FDMA-TDMA access, that compared to the pure FDMA avoids an excessive deployment of carriers, while versus the pure TDMA avoids the construction of too long time frames. A mixed FDMA-TDMA-CDMA access technique has been specified for the 3^{rd} Generation Universal Mobile Telecommunication System (UMTS). Both GSM and the new UMTS systems can take further advantage from using intelligent antennas to exploit the opportunities offered by the DOA discrimination. In two-way communications the uplink is divided from the downlink either by FDD (Frequency Division Duplexing) or by TDD (Time Division Duplexing). FDD is characterised by full-duplex communication while TDD by half-duplex, nonetheless transmission and reception appear simultaneous to the TDD users. For the aims of the invention that will be described the physical channel must be accessed via TDMA, in addition, the base stations shall perform reception beamforming for discriminating the DOAs and transmission beamforming to properly shape the mainlobe of the power radiation diagram on the azimuthal plane. Combinations of TDMA with FDMA and/or CDMA constitute preferred embodiments.

In the previous text the only considered Network Elements (NE) are MS and BS, but the PLMN includes other network elements having higher hierarchical level than the BS. More in particular, a group of adjacent cells exploiting all the available resources constitutes a cluster governed by a Base Station Controller (BSC), also termed Radio Network Controller (RNC) in 3^{rd} generation systems. A generic BSC/RNC is connected to all the clustered BSs and to an Message Switching Centre (MSC) connected, in its turn, to the Public Switched Telephone Network (PSTN). Inside the covered area the available resources are reused at cluster level. Now that the physical channel and the main network elements have been defined, a protocol shall also be defined for correct communicating trough the network. A communication protocol is a set of fixed rules for a preordained transfer among the various network elements of either signalling or payload. Various communication protocols govern the operation of an active MS either in idle mode or in dedicated mode. In idle mode the MS is continuously monitoring the transmissions from the neighbouring cells for the aim of updating a list of preferred cells from which selecting a target one for entering the dedicated mode. The minimum communication protocol for dedicated mode foresees the following steps: competition among the various users (MS) to accede to a service channel; allocation of the uplink and/or downlink physical resources to an admitted user; transfer of the user information on the allocated channel for all the active session; termination of the active session and release of the resources. Competition consists of repeatedly sending an access burst on a common uplink Random Access Channel (RAC) . Once the access is granted, the physical resources allocated to the user are depending on the gender of multiplexing is performed and may include: frequency, timeslot, code, and angle of transmission. The GSM user having assigned a Traffic Channel (TCH), constituting the circuit switched payload, has the same timeslot automatically allocated both in uplink and downlink. In case of General Packet Data Service (GPRS), recently added to the GSM for packet data transmission, the allocated resources are shared among the various requesters by a criterion trading-off between individual and collective requirements, taking into account the overall amount of the resources. Various scheduling mechanisms are proposed either for uplink or downlink. That is, the GPRS user may have allocated one (or more) uplink timeslot different from downlink. A suitable criterion for the allocation of the resources is to keep the overall level of the radio interferences as low as possible. This allows more intensive reuse of the resources, to say, reduction of the cluster dimension and greater spectral efficiency.

Global interference reduction is a milestone for all the cellular systems and prevails on the reaching of the best possible quality of individual communications; a power control mechanism is in fact provided in uplink and/or in downlink to keep the transmission power at the minimum level compatible with the agreed quality of service (QoS). A good criterion for the allocation of the resources is described in the International patent application WO 98/24258, which belongs to the same SIEMENS Assignee, directed to the dynamic allocation of radio channels in a digital telecommunication network with CDMA-TDMA-TDD access. The allocation method continuously sorts out the timeslots at the radio interface by priority values based on the radio measures, higher priority values being assigned to the timeslots with lower interference and/or higher quality of the respective radio channels; the path loss of the radio signal a communication service has been requested with is also measured; then the channels of the communication service are allocated in a timeslot having a priority value increasing with the path loss of the radio signal used for requesting the service. In few words: the lower the interferences on an allocated timeslot the farther the requesters. Undoubtedly the cited method introduces a progress in the attempt of reducing the average interference, because the farthest users are not forced to a large increase of their transmission power to reach the agreed C/I targets. Nevertheless the method is not yet optimal because the allocation of timeslots to the users is not performed with a criterion able to exploit the geographical position of the users.

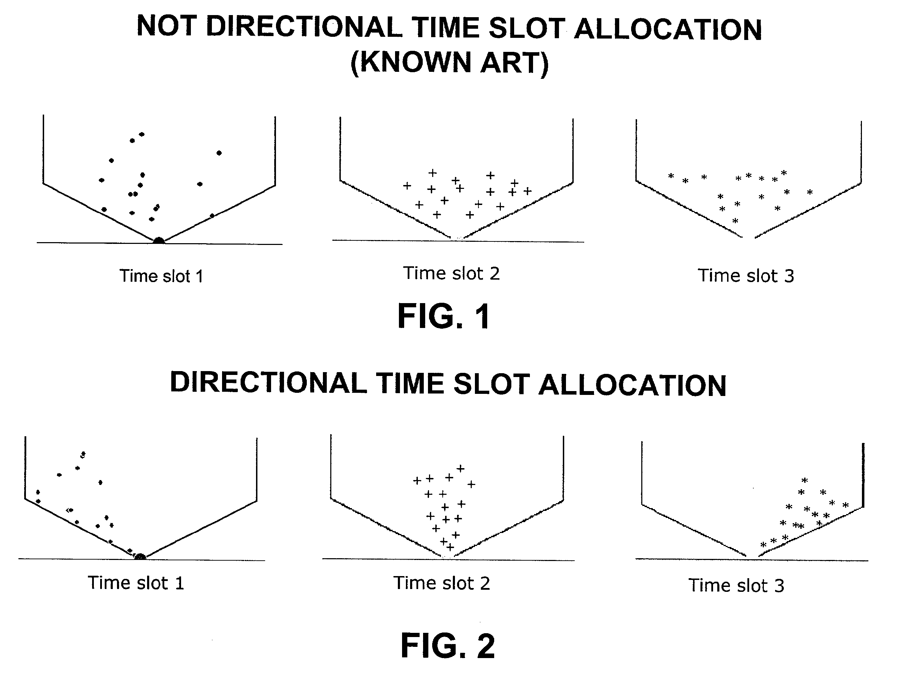

The known allocation criterion is similar to the hypothetical scenario depicted in **fig.1** relatively to a 120° degrees sector cell populated with 48 users uniformly distributed among three timeslots. **Fig.1** represents a photograph at a certain timeslot containing 16 users with any angular position inside the sector. In case of GSM/GPRS the 16 users are FDMA, in case of UMTS the 16 users are CDMA (and in minor measure also FDMA). Because of the spread of the angular positions of the users, potential intercell interference exists. The intercell interference is more or less dangerous depending on the grade of exploitation of the given resources. In consequence of a drastic cluster reduction the same resources might be reused in adjacent cells giving rise to co-channel interference; the latter is particularly insidious because impossible to be filtered out and shall kept as low as possible. The CDMA channels are made also vulnerable to the adjacent channel interference because of an imperfect orthogonality of the coded sequences due to several unpredictable causes. Unfortunately in the art there are not sound indications of how exploiting beamforming at the base station for a smart allocation of the resources, in order to further decrease the average interferences. The known examples of beamforming are mainly focussed on the following aspects: a) joint space-time channel estimation for improving channel equalisation and signal detection; b) implementation of the SDMA technique; c) reduction of the transmission power from the singular antenna elements to achieve better linearity of the transmitter.

### OBJECTS OF THE INVENTION

The main object of the present invention is that to fill up the gap of the known art and indicate a radio resource management method able to exploit the geographical positions of the users in respect of the neighbouring base station antennas, independently of the type of access.

### SUMMARY AND ADVANTAGES OF THE INVENTION

To achieve said objects the subject of the present invention is a radio resource management method, as disclosed in the claims.

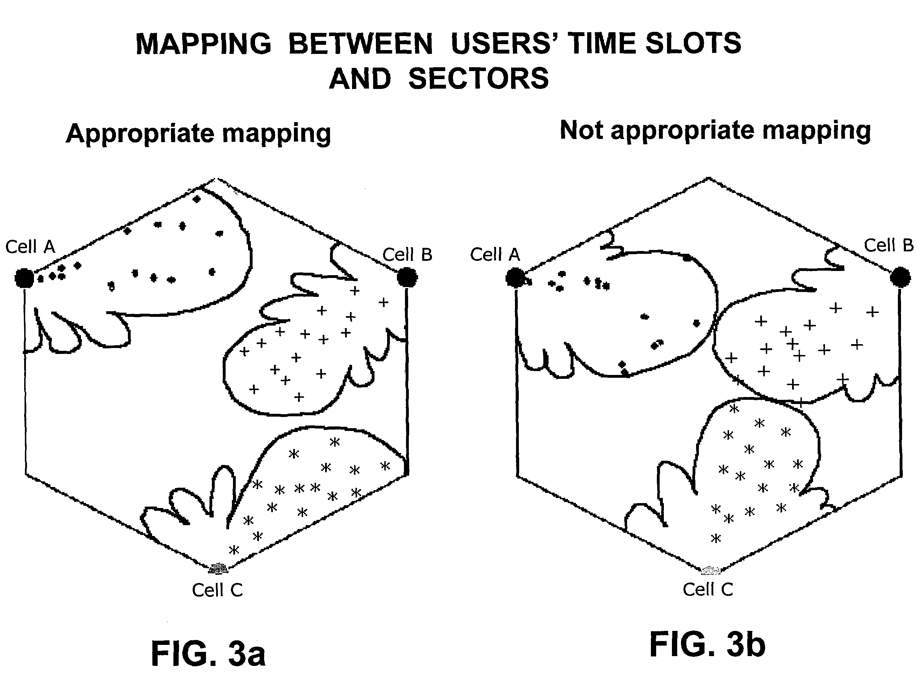

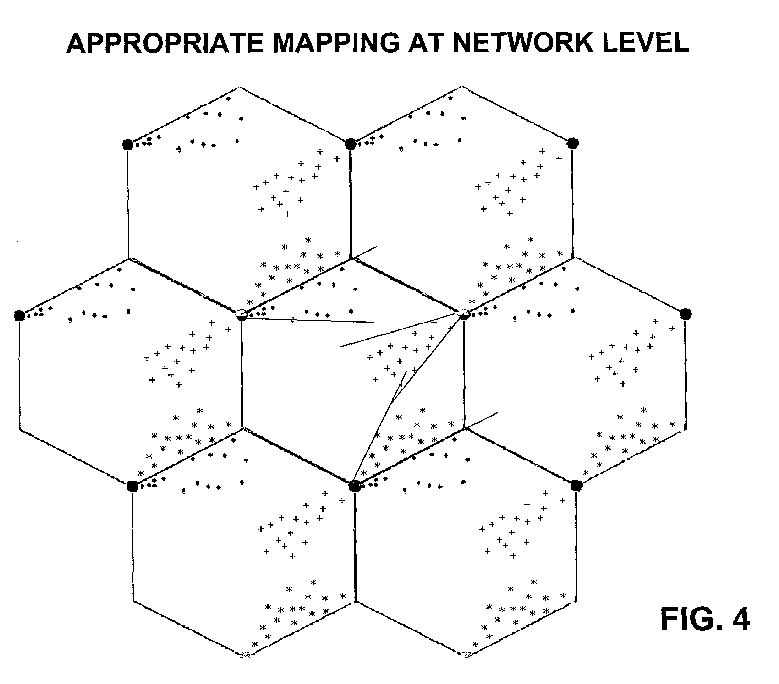

**Fig.2** shows a possible timeslot allocation among different users in dependence on their DOA, as suggested by the method of the invention. Differently from **fig.1** the 120° degrees sector is now subdivided into three narrower sectors each one relevant to a different timeslot; each narrower sector having a certain number of users allocated to it on the basis of the best matching between the measured DOAs and the angular position of the mainlobe radiation defining the sector. That is, the uniform angular distribution of fig.1 is not more maintained but the new distribution is shaped like the sectors. When the radio resources of the whole network are allocated as in the example of **fig.2** the average level of intercell interference depends on the mapping criteria adopted for creating the relationship between frequency, timeslots, and sectors. The method of the invention permits to fight intercell interference by means of an appropriate mapping between sectors and active timeslots which prevents the beams of adjacent cells overlap each other heavily. This means non-overlapping receptions and non-overlapping transmissions at the BTS side. This concept is made clear in the successive **Figures 3a, 3b**, and **4**. **Figures 3a** and **3b** show an hexagon containing 3 cells: A, B, and C, each cell covering a slice of 120° out of 360° delimited as in the Figure. **Fig.3a** shows a "photograph" at a given timeslot of an appropriate mapping between users and sectors which aids to reduce beams overlapping and co-channel interference from outer cell users. **Fig.3b** shows an example of not appropriate mapping because the choice of sectors in the active timeslot is not favorable due to beams intersection. The appropriate mapping of **fig.3a** implicates frame synchronisation between cell A, cell B, and cell C, this because the non-interfering mainlobes shall be transmitted simultaneously (on the same timeslot). **Fig.4** is obtained from the replication of the hexagon of **fig.3a** on a wider area. The depicted scenario is an example of a possible timeslots-by-sector configuration extended to the whole network. With reference to **fig.4** it can be argued that by properly choosing the sector width and orientations the partial overlapping of mainlobes can be minimised in the synchronised network. The narrow beams corresponding to each sector contain all active users and a reduced number of intercell users located as far as possible far away from the BTS, in order to increase path loss related to interfering signals.

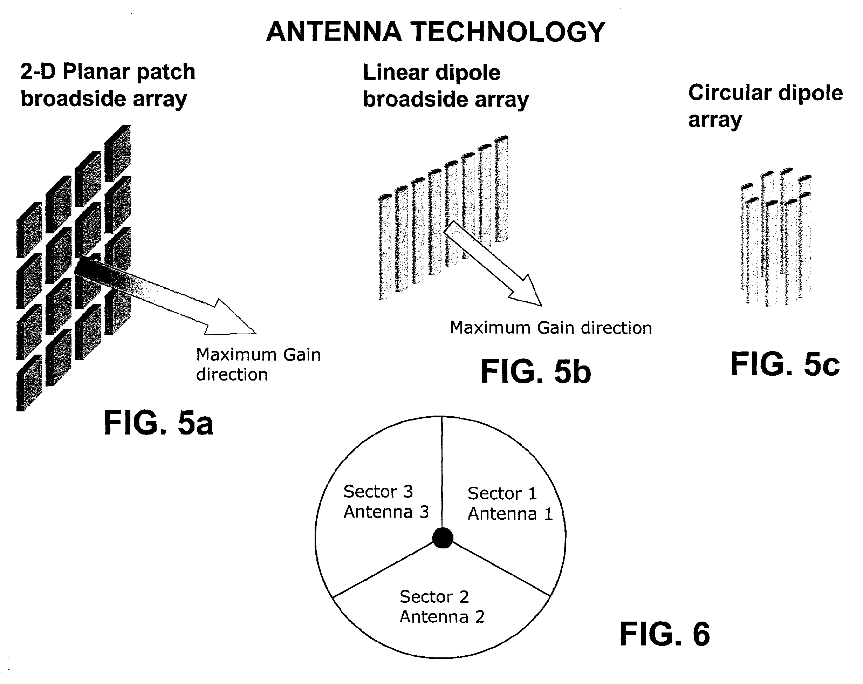

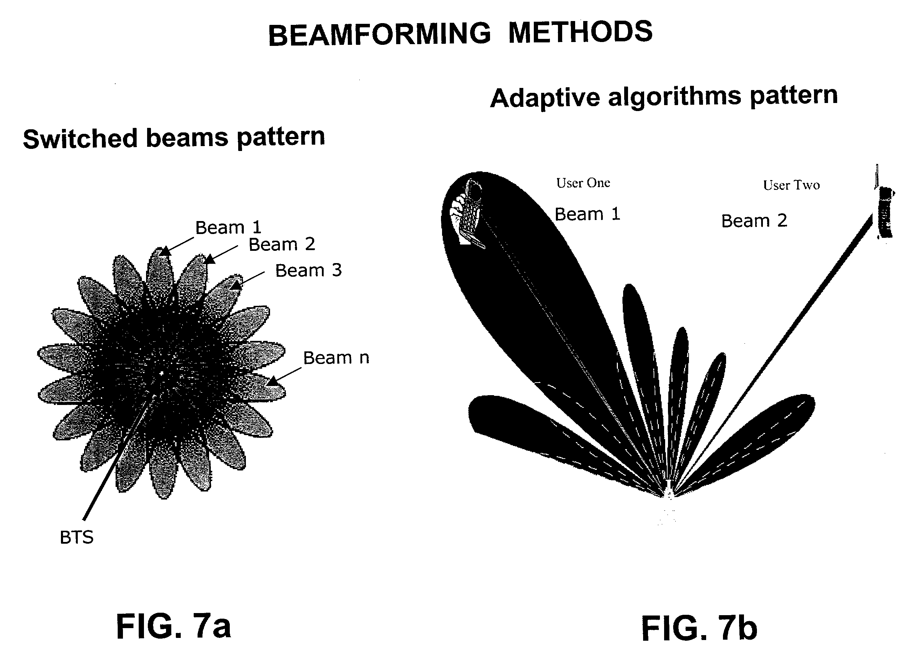

The radio resource management method of the invention can be applied on systems with certain beam-shaping capabilities and is open to each antenna technology. Beam-shaping features are usually implemented by means of planar, linear, or circular array as shown in the **fig.5a, fig.5b**, and **fig.5c**, respectively, but could also be achieved with appropriate combination of sectored single-element antennas driven by a suitable switching network. In **fig.6** there is a relevant example of a cell with its BTS at the centre point, the BTS drives 3-sectored antennas each antenna belonging to a specific sector. Usually in mobile communication systems the linear and circular array solutions offer a good tradeoff between performances and overall complexity. Linear arrays are chosen for sectored cells with BTS located at one edge (corner excited cells) , while circular arrays are better for "omnidirectional" cells with the BTS at the centre point (centre excited cells). The beamforming policy and associated algorithms are strictly related to the antenna technology. The method of the invention doesn't focus the attention on which technique is implemented, but on the Radio Resource Management (RRM) aspects and implications. In few words the beam-shaping capabilities might derive from a simple switched beams method for generating a beam pattern like the one shown in **fig.7a,** or by means of a fully adaptive algorithm with null steering features for generating a beam pattern like the one shown in **fig.7b**. Due to the reciprocity of the antenna the beam pattern of **fig.7b** can be used to shape both the transmissions and the receptions. The RRM method of the invention is in agreement with the timeslot allocation mechanism of the different systems. That is, in case of pure GSM an unique algorithm allocates the same timeslot both for Uplink and Downlink communications. In case of GPRS or UMTS the Uplink and Downlink timeslots are allocated independently to each other and with separate algorithms. In all cases the average level of the interferences is reduced. The number of antennas assembled into an array is usually less or equal to eight, in order to maintain acceptable level of complexity. This leads to mainlobe width of about 25° - 30°. Since the null steering capabilities are related to the degrees of freedom provided by the array (a linear array with M antenna elements can offer M-1 degrees of freedom), while the number of intercell users is usually greater than the degrees of freedom, especially with CDMA, it derives the impossibility to steer nulls toward each user separately. In consequence of this limitation the spatial distribution of intercell users plays a key role for interference reduction. The present radio resource management method aids to fight intercell interference by spatially filtering the interference clusters through an appropriate by-DOAs grouping criterion.

### BRIEF DESCRIPTION OF THE DRAWINGS

The features of the present invention which are considered to be novel are set forth with particularity in the appended claims. The invention, together with further objects and advantages thereof, may be understood with reference to the following detailed description of an embodiment thereof taken in conjunction with the accompanying drawings given for purely non-limiting explanatory purposes and wherein:
- **fig.1,** already discussed, shows a users allocation of the prior art;
- **Figures 2** and **3a**, already discussed, shows the users allocation of the present invention with proper mapping between sectors and timeslots;
- **fig.3b**, already discussed, shows a possible but not advisable users allocation with not correct mapping between sectors and timeslots, in consequence of having implemented in reductive way the criteria of the invention;
- **fig.4**, already discussed, shows the network obtained by J.U replication of the **fig.3a**;
- **Figures 5a, 5b,** and **5c,** already discussed, show known examples of planar, linear, and circular arrays suitable for beamforming;
- **fig.6**, already discussed, shows a central-fed cell with 3-sectored antennas;
- **Figures 7a** and **7b**, already discussed, show known examples of switched beams and fully adaptive beam patterns, respectively;
- **Figures 8a** to **8e** show as many possible cell topologies;
- **Figures 9a** to **9g** show as many sectorization of the preceding cell topologies;
- **Figures 10a** and **10b** are the preceding Figures 9a and 9b associated to respective timetables illustrating all the possible configurations of the mapping between sectors and timeslots;
- **Figures 11a** to **21** illustrate the network topology as some criteria for space-time setting;
- **fig.22** shows a flow-chart of the timeslot allocation procedure based on DOA discrimination;
- **fig.23** depicts a possible scenario resulting from the known (random) criterion for allocating the users to the cells of the network base element visible in fig.15;
- **Figures 24** to **26** illustrate possible resulting scenarios from as many criteria of the present invention for allocating the users to the cells of the network base element visible in fig.15;
- **Figures 27** to **30** show the percentages of the SNR increase with various cell radii for a simulation based on the criteria depicted in Figures 24 to 26 with respect to the known criterion of fig.23; and
- **fig.31** shows the percentage of not admitted (dropped) users resulting from simulations relevant to the criteria of the Figures 23 to 26.

### DETAILED DESCRIPTION OF AN EMBODIMENT OF THE INVENTION

In the following description the basic element considered to build up the communication network is the cell, usually modelled using an hexagonal shape, but cells with any arbitrary shape are possible. For the aim of the present invention the first important issue is the position of the BTS within the hexagon and two cases arise:
1. BTS at the centre of the hexagon;
2. BTS at the edge.

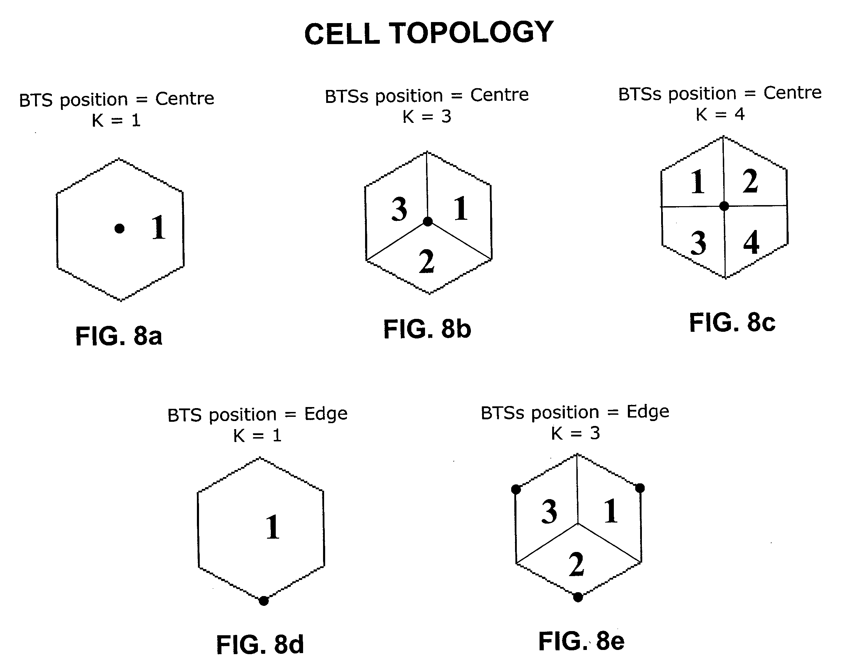

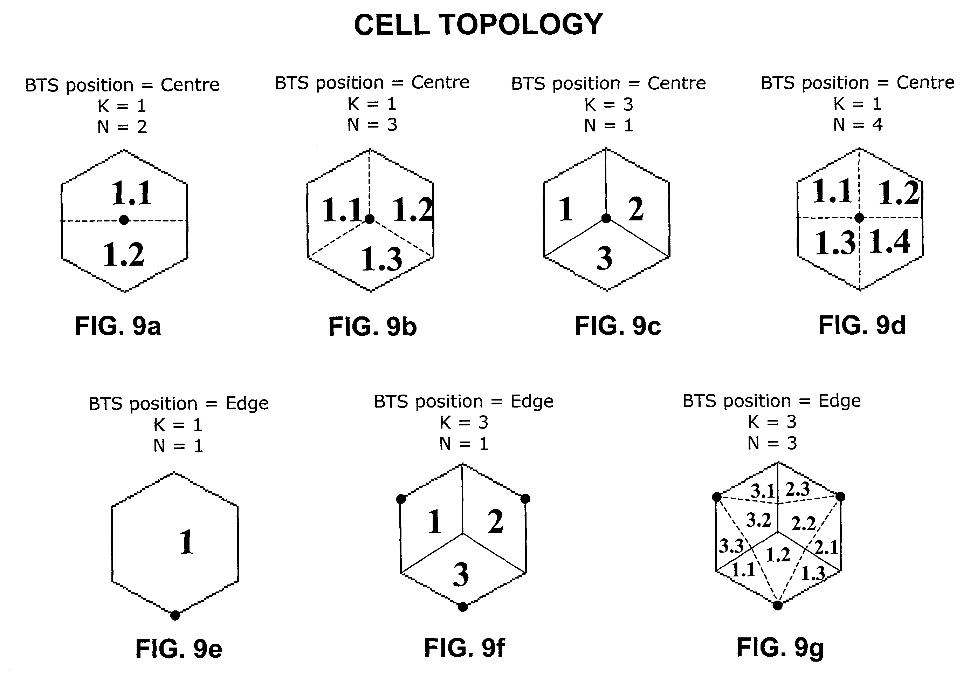

With reference to the **Figures 8a** to **8e**, a first step in the direction of the invention is the subdivision of the hexagon in K regions, where K is the number of the included BTSs, one BTS corresponds to one Cell. That is, K is the number of cells supported by each hexagon. For K ≠ 1 the shape of the cells is different from the hexagon. The number K depends on traffic issues, hence on the tradeoff between costs (number of BTSs) and capacity. Second step consists to subdivide each cell in N sectors having the common vertex in the BTS point and angular directions corresponding to the ones of the mainlobes which define the sectors. For asymmetric traffic (for example Nup Uplink timeslots and Ndn Downlink timeslots, with Nup ≠ Ndn) there will be two different sectorization masks, one for uplink and the other for downlink. It is also possible, but not recommended, to group together several timeslots for one sector. With reference to the **Figures 9a** to **9g**, there are:
- **fig.9a)**: One hexagonal cell (K=1) subdivided in 2 sectors (N=2) with BTS at the centre point.
- **fig.9b)**: One hexagonal cell (K=1) subdivided in 3 sectors (N=3) with BTS at the centre point.
- **fig.9c)**: One hexagon containing 3 cells (K=3) each of one sector (N=1) with all BTSs at the centre point .
- **fig.9d)**: One hexagonal cell (K=1) subdivided in 4 sectors (N=4) with BTS at the centre point.
- **fig.9e)**: One hexagonal cell (K=1) of one sector (N=1) with BTS at the edge.
- **fig.9f)**: One hexagon with 3 cells (K=3) of one sector (N=1) having all BTSs at the edges.
- **fig.9g)**: As the preceding figure but each cell is subdivided in 3 sectors (N=3).

The list of the above Figures indicates only few examples but with other values of K and N several models it can be built up; it's important to understand that the selection of the model should be taken according to the kind of network and the amount of traffic that it should support. Focusing on Uplink / Downlink direction having Nup / Ndn timeslots, each cell should be subdivided in Nus / Nds sectors. In the successive Figures the temporal evolution in the task of allocating the resources is considered.

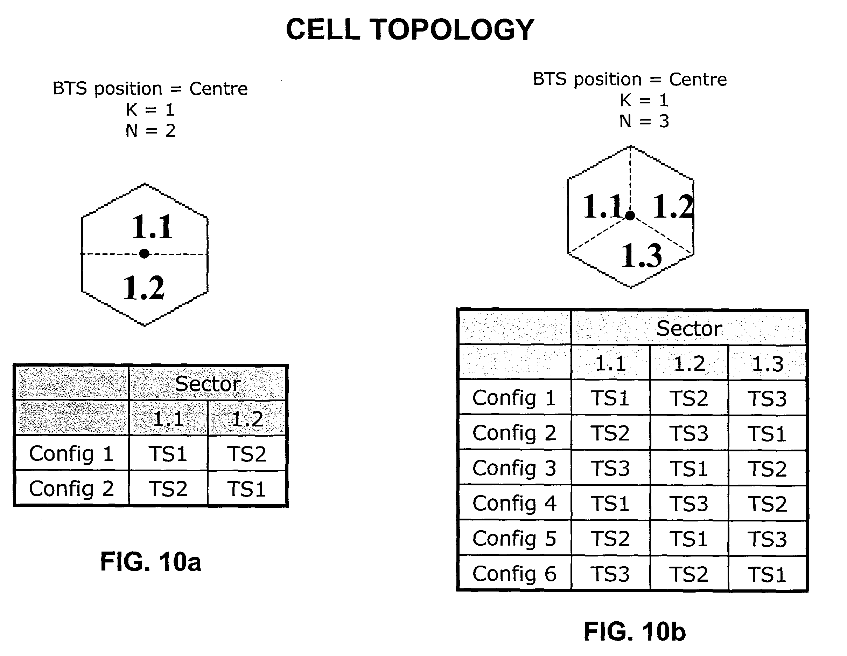

With reference to the **Figures 10a** and **10b** (reproducing **Figures 9a** and **9b)** two respective tables are included which contain all the configurations mapping the allocable Nup uplink timeslots onto the Nus sectors (two similar tables exist for the allocable Ndn downlink timeslots onto the Nds sectors). In the tables one row indicates the behaviour of the cell for the selected configuration and the chosen Uplink / Downlink direction. Configuration corresponds to the cyclic sequence of timeslot activation. For example considering in **fig.10b** 6 available Timeslots (TS) and symmetric traffic with 3 UL + 3 DL timeslots, each direction is completely described with one configuration row relevant to 3 timeslots. With reference to **fig.10a** with "configuration 1" the sector K.N = 1.1 is assigned to timeslot 1 and the sector 1.2 is assigned to timeslot 2. With reference to I**fig.10b** with "configuration 5" the sectors 1.1, 1.2, 1.3 have assigned, in order, the timeslots TS2, TS1, TS3.

In the preferred embodiment the number Nup / Ndn of allocable timeslots is equal to the number Nus / Nds of the sectors per cell, but this assumption doesn't limit the method of the invention essentially based on the directional allocation of the timeslots. In the preferred case of Nup = Nus = N (and Ndn = Nds = N') the number of possible configurations is equal to the N!=6 permutations of the 3 timeslots. Besides, the behaviour of the cell is periodic in time with one cycle correspondent to one radio frame (or subframe, depending on system radio interface) and during one cycle all sectors are activated exactly one time.

In all practical cases different from the preferred embodiment a trade-off shall be sought between Ndn and Nds, and similarly between Nup and Nus. As far as the GSM is concerned, Nup= Ndn = 8 is established and both the uplink and downlink timeslots with the same order in the frame are automatically assigned to the same user; in such a case the simplest choice is Nus = Nds (not necessarily 8). As the GPRS is concerned, in spite of the same GSM frame so as the access and duplexing mode, the allocable Nup timeslots can differ from the allocable Ndn timeslots, depending on the different traffic intensity on the two links. For example, in order to satisfy high Internet Protocol (IP) traffic Ndn > Nup is recommended. Asymmetric number of timeslots on the two links is usual in the UMTS systems, either of FDD or TDD duplexing mode. The number of sectors per cell, within the limit imposed by an 8-element arrays, depends in its turn on trading-off between the precision pursued by the interference reduction and the increased complication of the network. The larger the number of sectors per cell the better the interference reduction, but also the more complicated the directional time slot allocation and the configuration table. The lower the number of sectors per cell the poorer the interference reduction. From the above considerations a deterministic law binding the number of allocable timeslots to the number of sectors per cell, or vice versa, seems to not exist at the moment; in this optics the preferred embodiment seams to be a good compromise. In case of Nup ≠ Nus or Ndn ≠ Nds the following cases are possible: Nup > Nus, Nup < Nus, Ndn > Nds, Ndn < Nds. Considering for brevity the only uplink, when Nup > Nus is true, new configurations must be introduced in the configuration tables of the preceding figures to take into account the additional timeslots. In such a case the behaviour of the cell is always periodic in time with one cycle correspondent to one radio frame, but during one cycle at least one sector is activated more than one time. In case Nup < Nus is true, the rows in the configuration tables of the preceding figures shall be modified for reallocating the (Nus - Nup) timeslots. Because of the reallocation and the consequent always possible cochannel interference this case must be discarded. The preferred embodiment is assumed in all the remaining figures.

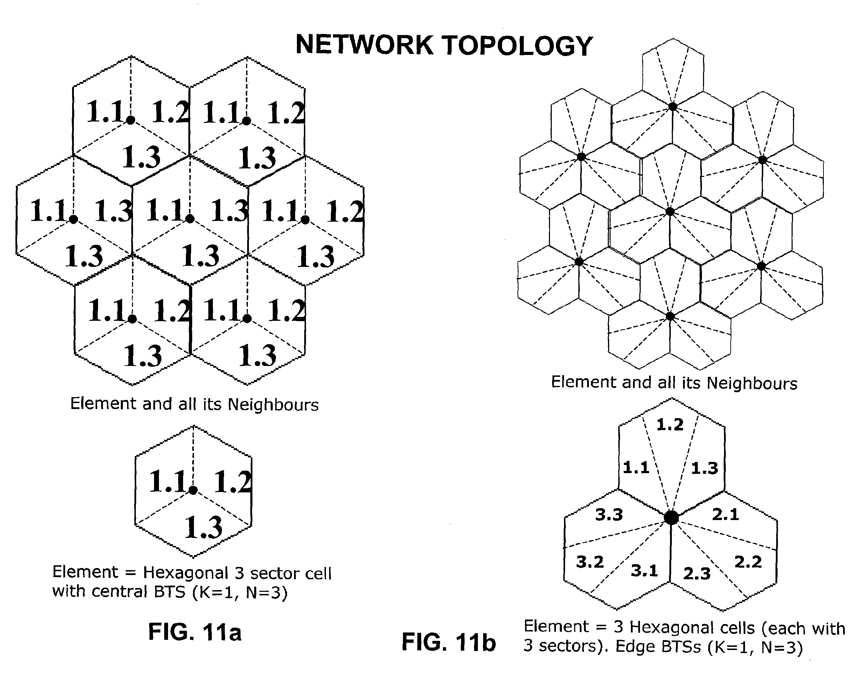

With reference to the following **Figures 11a** to **21** the concept of mapping sectors with timeslots within the cell is now extend to the surrounding hexagons and the entire network. The purpose is to avoid or limit any overlapping between main lobes of adjacent cells, as depicted in the example of **fig.4**, intended for adjacent also the co-located cells. Due to the hexagonal shaping, each element of the entire network is surrounded by 6 others identical elements. With reference to **fig.11a** the basic element is the hexagonal cell subdivided in 3 sectors with the BTS at the centre point. With reference to **fig.11b** the basic element is composed with 3 hexagonal cells having the BTSs at the edge, each cell contains 3 sectors. These two examples have been introduced only in order to explain the main concept but it's easy to build up several configurations. The behaviour of each base element is periodic in time as the one of **fig.10b.** Each element of the network has its own sequence (configuration) and it's necessary to create suitable relationships between all sequences in order to achieve maximum interference rejection. Moreover the relationships must respect topological properties so that they can be repeated periodically in space.

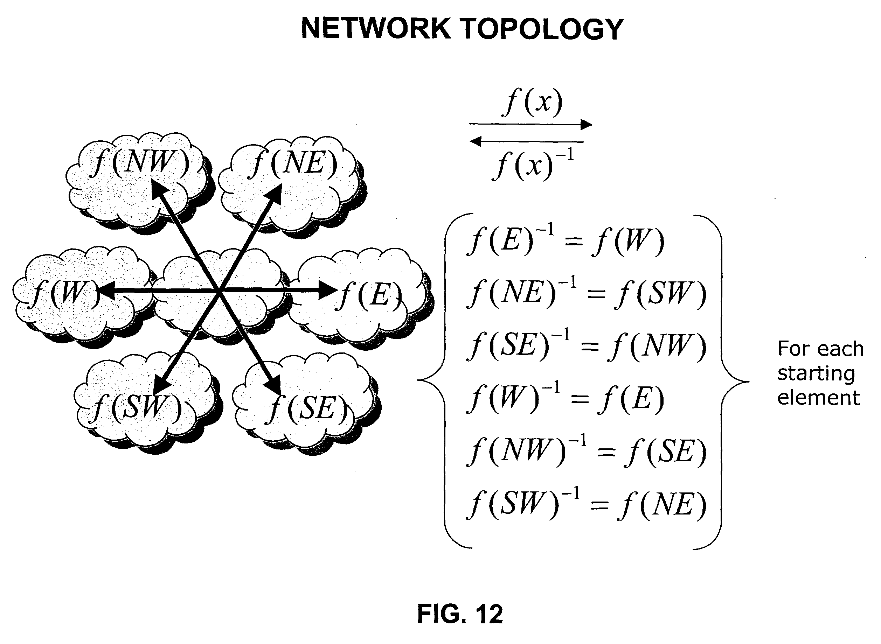

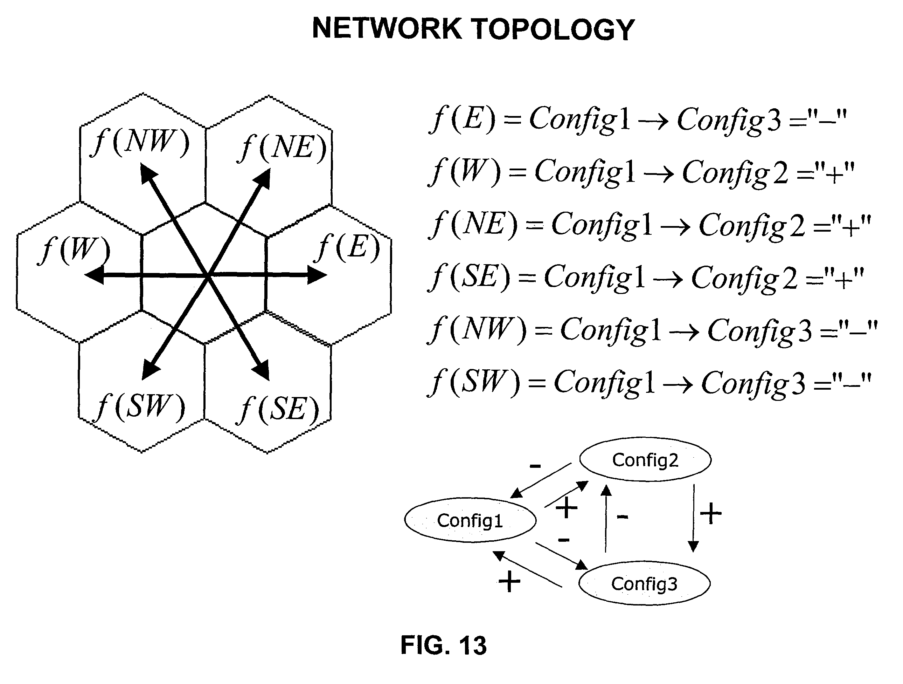

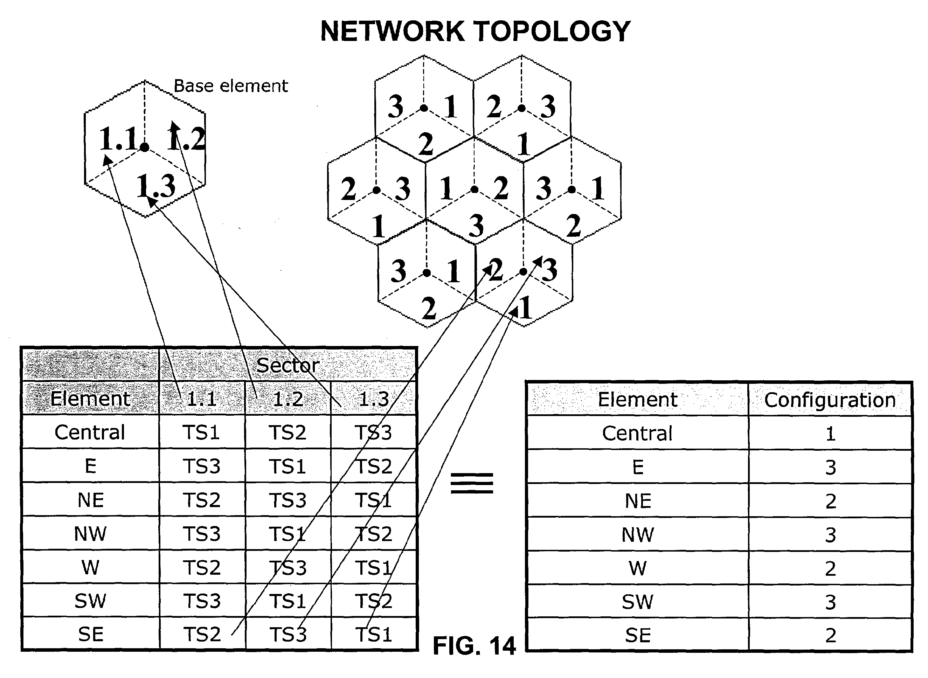

With reference to **fig.12,** relevant to the network of **fig.11a,** each cloud represents the basic network element constituted by a single cell hexagon. It's possible to define functions that describe the spatial relationships between configurations of adjacent elements, in the figure one function is indicated as an arrow. For better understanding the liaisons that bind these functions their names are chosen according to geographic notations: East, West, North, South. Once a cardinal point is conventionally associated to a direction perpendicular to a side of the hexagon, the other directions are automatically determined by the hexagon superimposed to the quadrant of the compass; assuming for example the east point on the right side, the following 6 functions are determined: f(E), f(SE), f(SW), f(W), f(NW), and f(NE), where: E, SE, SW, W, NW, NE indicate: East, Sud-East, Sud-West, West, North-West, and North-East, respectively. In the example f(E) means function that binds the configuration of one element with the configuration of the adjacent element at its East side, and so on. Each function has its "inverse" represented by the contrary path and named f(.)⁻¹; the geometrical constraints lead to important equalities indicated in **fig.12.** An example of consistent functions f(.) is provided by observing the **fig.13** (similar to **fig.12).** The name "+", "-" written at the right side of each equation suggests the operation of moving along an imaginary ring (in the bottom of fig.13) closed by the time-space periodicity of any configuration. This presupposes frame synchronisation inside the cells of the whole network, or at least of the geographical area involved with the invention. The situation can be summarized with the tables of **fig.14** or equivalently with the drawing in which the numbers positioned in each sector indicate the corresponding timeslot. Examining the drawing of the network topology at the top of **fig.14,** and considering that in a timeslot N the system activates all the corresponding "N" sectors, it is possible to see directly by the orientation of the adjacent 120° sectors if the choice is correct from an interference rejection point of view.

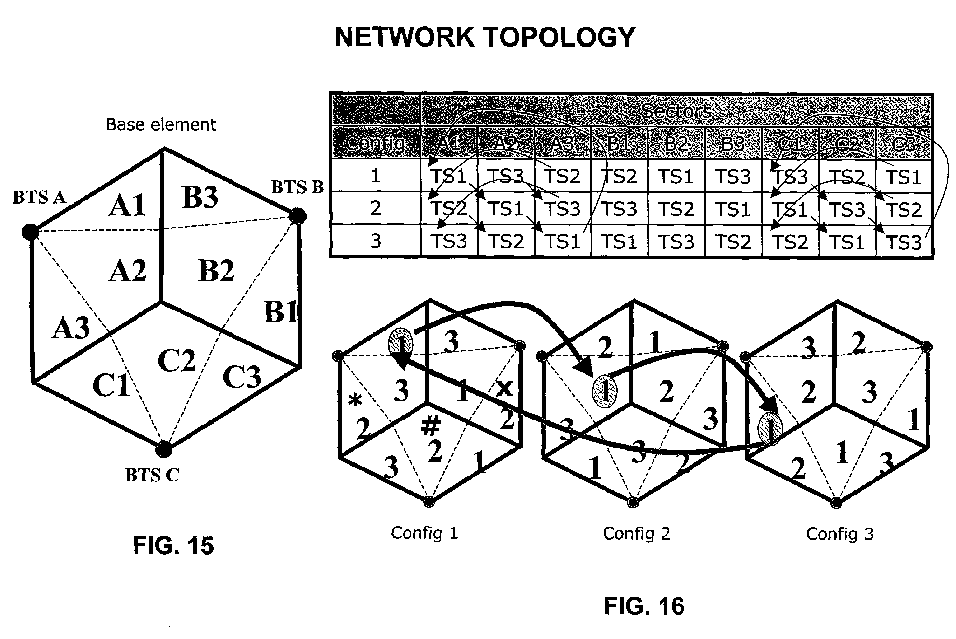

In the successive **Figures 15** to **21** one more exhaustive example is described in which the Radio Resource Management process is subdivided in the following main steps:
1) - Base element choice;
2) - Base element timetable setting;
3) - Network Deployment;
4) - DOAs measurement and timeslot allocation.

Step 4) is always executed on-line, while steps 1), 2), and 3) are preferably performed off-line during the planning phase of the whole network, this because those steps directly impact the network architecture and an accurate study is needed. Certain networks support dynamic cell splitting to face sudden high traffic inside a limited area; in such a case the planning must consider also this feature.

With reference to **fig.15** the first step "Base element choice" is now described choosing as Network base Element a hexagon with 3 cells and three BTSs at the edges, each cell containing three sectors. Without limitation, transmissions taken place on the uplink direction having three timeslots available. The main step consists of:
1.1 Chose the shape of the base element.
1.2 Chose the number of cells in the base element (K).
1.3 Chose the position of the BTSs equipment.
1.4 Chose the sectorization of each cell according to the Uplink / Downlink direction and the number of available timeslots (N).
1.5 Chose the width of each sector (not necessarily all sectors have the same width).
1.6 Draw the element with sectors and BTSs names (in the Figure cells are separated with a continue line while sectors with a dashed line).

Once we get the base element, the second step "Base element timetable setting" is introduced for selecting the temporal behaviour of the base element during all available timeslots. With reference to **fig.16** this item allows to produce a "configuration table" like the partial timetable visible on the top of the figure; note that because in this embodiment there are more than one cell in the base element, the configuration table has to be built up "from an interference rejection point of view". The total of the possible configurations is equal to the number of permutations of a group including N sectors associated to N timeslots raised to the number K of the cells, in total (N!)³ = 216. This means that there will be good rows and bad rows in a complete table of 216 rows, depending on the particular associations between sectors and timeslots. It is preferable to build up a partial table quite larger than the depicted one, because this makes next steps easier, whether during next steps the table does not contain a sufficient number of configurations they can be added at the moment. A trick to proceed is to build the first row and then fill the others simply by shifting left (or right) the contents of the cells of the first row. The arrows in the table of **fig.16** show the right shift (note that the TS2 of first row in column A3 goes to the first column A1 during the shift, as well as the TS3 of second row in column A3 jumps in first column A1; this behaviour highlights that this "shifting" has to be planned with a fixed period of N (3 in the example). The trick leads to get always a minimum of N rows in the table. In the bottom part of **fig.16** each row of the table is represented by drawing one base element (hexagon in this example) and putting in each sector the number that indicates the timeslot it corresponds to, the arrows aid to follow the sequence. For a better understanding of the concept "interference rejection point of view" it's useful to look at the *, #, x symbols in **fig.16** imagining that they represent signal/s of an user or a group of users. The *, #, x users are transmitting (uplink) simultaneously and the interference rejection capabilities means that:
- The * signal/s measured from BTS C and B has to be attenuated as much as possible.
- The # signal/s measured from BTS A and B has to be attenuated as much as possible.
- The x signal/s measured from BTS C and A has to be attenuated as much as possible.

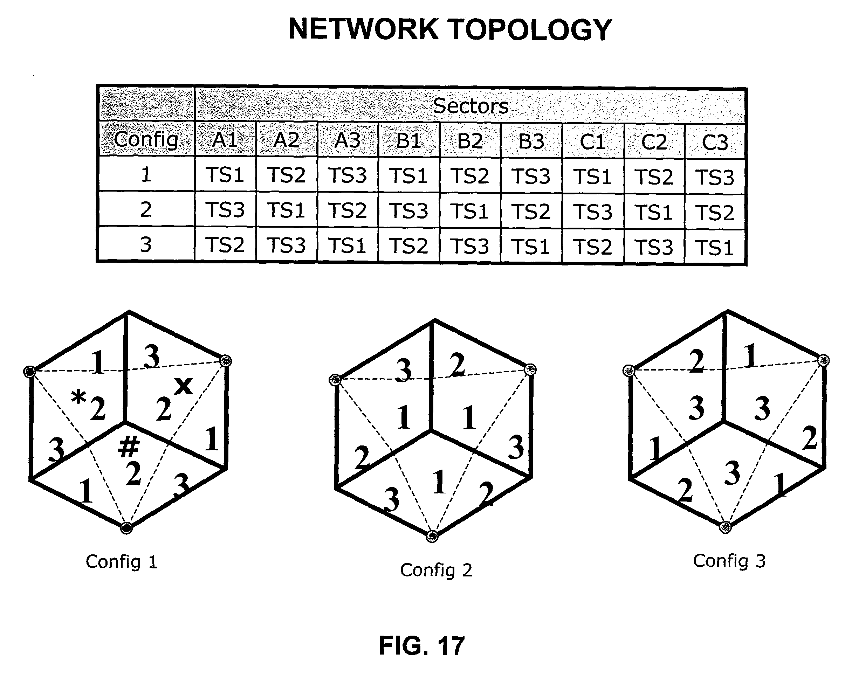

For the given configuration table these constraints are well accomplished because the main lobes of all BTSs do not intersect each other heavily in the same timeslots. The opposite situation is depicted in **fig.17** where the selected configuration leads to great intersection of lobes corresponding to the same timeslot (TS2 in config. 1...) . In this case almost all users *, #, x are located also within the main lobe of BTSs that don't belong to their cell. The table of **fig.17** has not been built up from a correct "interference rejection point of view". Each row of this table causes bad lobe intersections but this occurs only within a specific timeslot (TS2 for config1, TS1 for config2, TS3 for config3). This fact it's important because tells us these guidelines:
- Before considering a configuration table as good a deeply investigation is needed, trying all possible configurations in search of faults.
- Configurations that could appear bad at a first look might represent a necessary compromise in building the table.
- The purpose to find an overall good solution is hard to achieve and an accurate study shall be performed.
- The table must be filled up foreseen the effect of the future placement of the adjacent elements.

Once the base element and the timetable have been achieved, the next step is the "Network Deployment". The preceding **fig.12** shows that for this new item it's sufficient to place the first tier of elements (6 elements) that surrounds the base one. Deploy the network means:
3.1 Chose one configuration of the timetable produced in step 2.
3.2Define the f(.) functions that represent the spatial relationships between configurations of adjacent base elements. The functions must be accomplished with all constraints of **fig.12** and should be defined from an "interference rejection point of view" (the same concept of the main step 2).

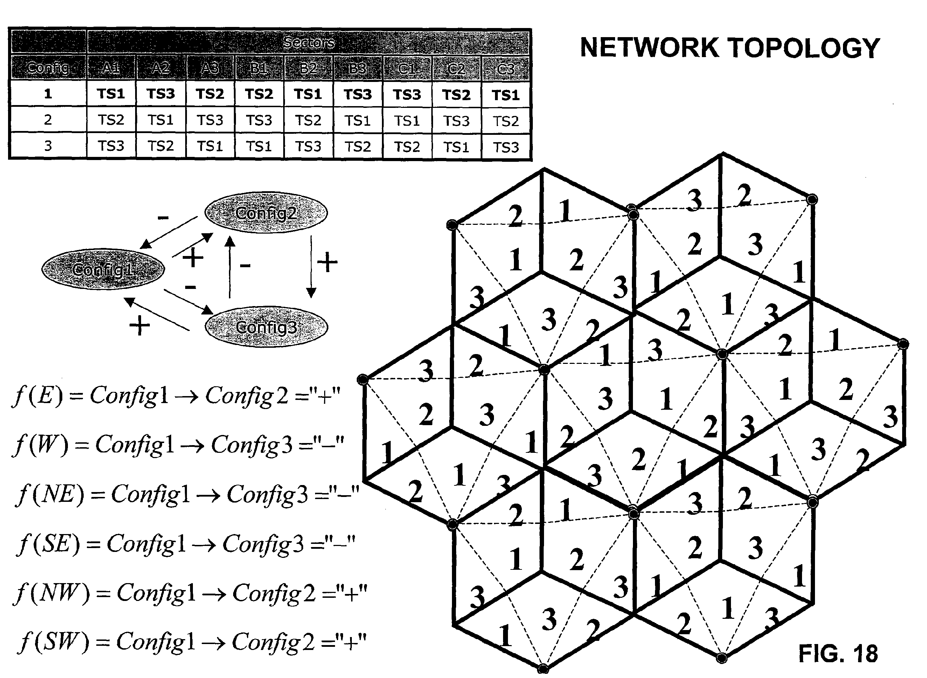

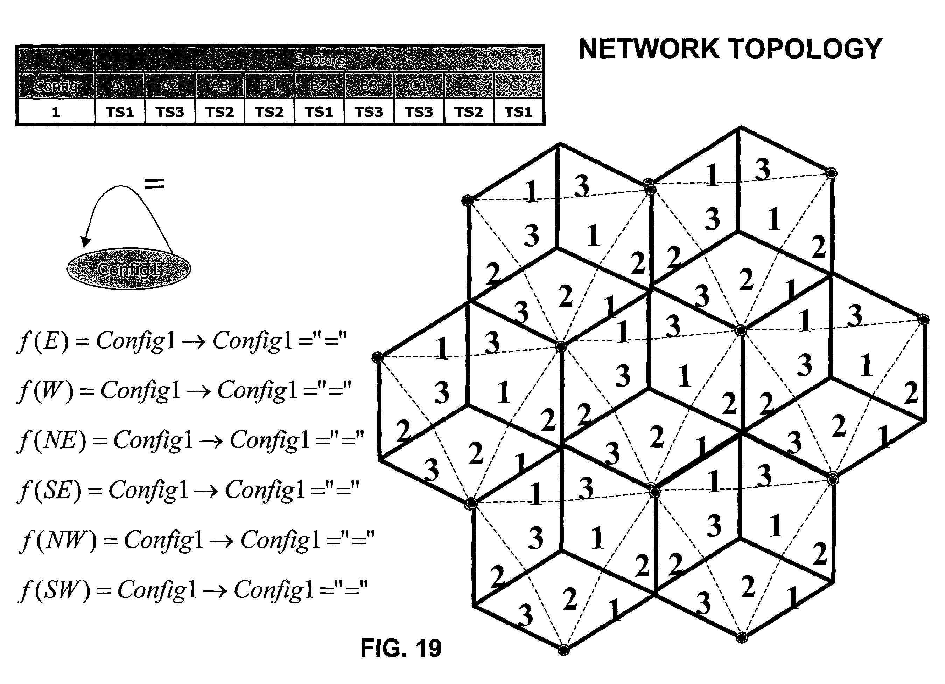

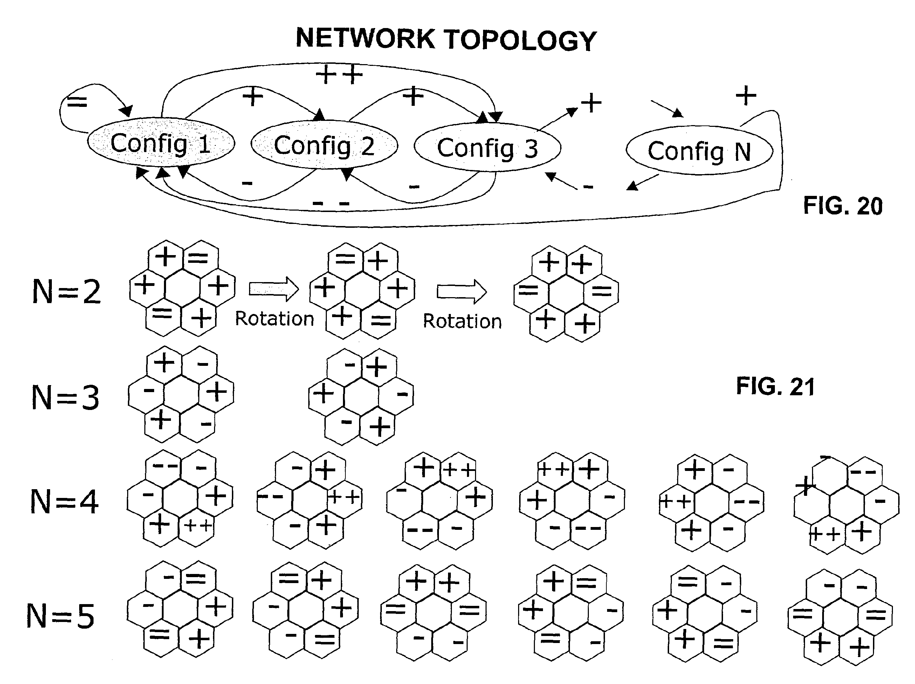

Steps 3.1 and 3.2 are performed with reference to **fig.18** which shows the base element surrounded with all its neighbours. In step 3.1 the configuration 1 of the uppermost timetable in Figure is selected (it's the same table of **fig.16)** . In step 3.2 the equalities in the f(.) functions define all necessary relationships, for example f(E) brings from "configX" to "configX+1", etc. Properties of such a network make easy to add elements wherever is needed by simply applying the appropriate functions. **Fig.19** (similar to **fig. 18)** shows the simplest way to deploy the network, which is to define all functions as "Identities" where identity means no action, no change of configuration. Some practical rules can help to create functions according to constraints of **fig.12,** considering that the number of configurations necessary for deploy regular networks is equal or less than N (N = Number of timeslots considered UL or DL). The diagram of **fig.20** shows the functions "+, ++, -, --, =" for an N-state configurations network, where ++ or -- means double step. Functions built up like those indicated in **fig.20** generate a set of rules that is summarized in **fig.21** for N = 2,3,4,5, where each hexagon represents a network element and the sign within its shape indicates the function that brings from the configuration of the blank hexagon (central) to the configuration of the specific one. Given one set of functions it's possible to obtain others sets by simple "rotations". It's clear that once the set of configurations (timetables and functions) has been chosen it has to be applied on the entire network. Simulations should be performed in order to evaluate which is the suitable scheme. To get better performances in dynamic environments, such as: traffic increase, or sharing different services, several configuration schemes are stored and the best one chosen according to actual conditions.

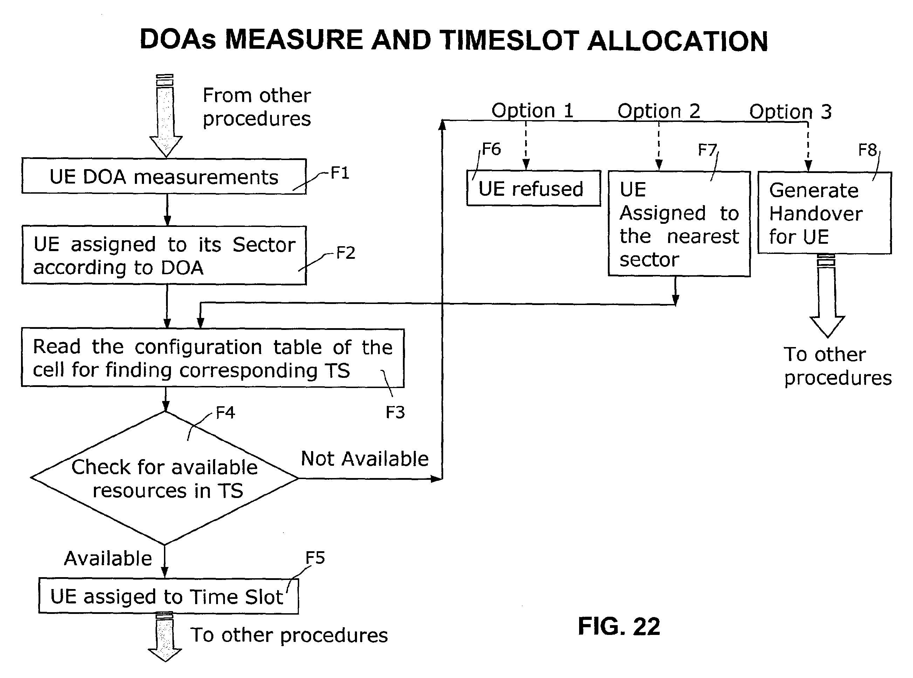

With reference to **fig.22** the last main step named "DOAs measurement and timeslot allocation" is described. As shown in the Figure, by the larger arrows, the fourth main step is entered by other procedures and brings to other procedures, in accordance with its on-line nature. Suitable initiator procedures are: Admission Control, Channel Allocation, Handover, etc., while continuation procedures are the ones of Dedicated mode. The fourth main step is carried out through steps labelled F1 to F8. In step F1 the BTS performs DOA measurements on each relevant signal received in uplink and previously synchronised; then step F2 is entered and the MS/UE is assigned to the sector best in agreement with the measured DOA. This is true for all signals transmitted by a MS/UE operating either in idle mode for requesting the access to the network or in dedicated mode having a timeslot already assigned. The reallocation of an MS/UE in dedicated mode is made necessary by the mobility of the user. The successive step F3 is devoted to the read of the configuration table (timetable) of the cell for finding the corresponding timeslot. This step and the successive are performed by the network element having in charge the timetable, usually the resource allocation is a centralised task charged to the BSC / RNC, or the MSC. From the MS/UE point of view the other network elements are considered as "the network". The availability of the corresponding timeslot is checked in step F4. If in F4 the timeslot is available the MS/UE has the timeslot assigned, otherwise various options are open in steps F6, F7, and F8. A first option exerted in F6 is to refuse the access to the MS/UE. A second option exerted in F7 is that to try the assignment of the timeslot allocated in the nearest sector. This option consists of switching to the configuration table of the nearest sector and repeating step F3 for finding the corresponding timeslot. A third option exerted in F8 is to generate a handover command for the MS/UE.

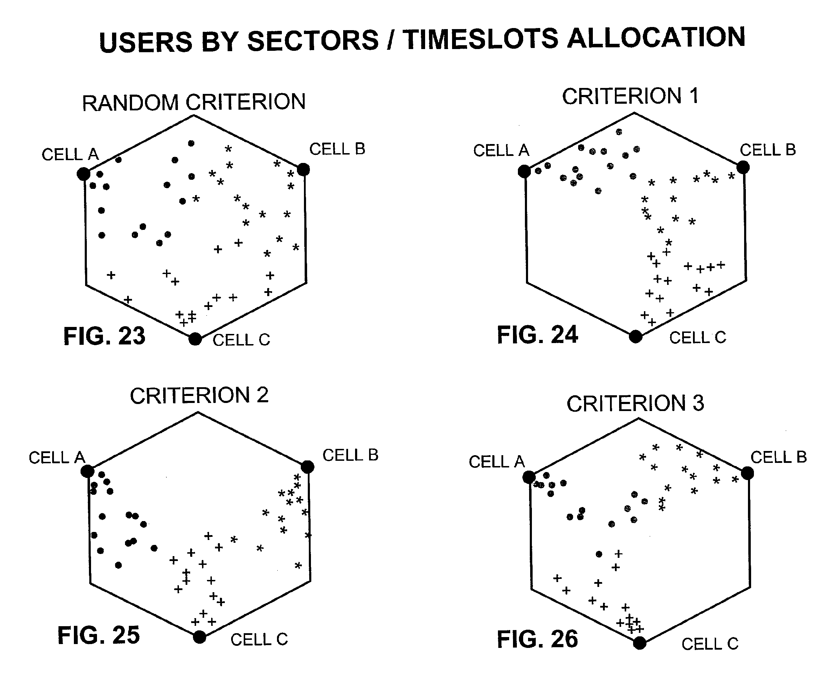

In the remaining **Figures 24** to **30** the results of simulations for different embodiments of the invention are illustrated as improvement in respect to the prior art allocation of **fig.23. Fig.23** shows a "photograph" of the users randomly allocated inside each respective 120° sectored cell. As previously said, the possible allocating modes of the present invention are quite a lot for a base element, besides, moving among the network these criteria further increase. The considered simulations are relevant to only three preferred criteria applied to the hexagonal base element of **fig.15,** as illustrated in the **Figures 24, 25** and **26**, with the further bond that the selected criterion has to be applied in all the network. The only uplink direction is studied assuming symmetric traffic on three timeslots and sectored cell of 120° subdivided in three equal sized sectors. The modelled cells have different radii, namely: 0.3, 0.5, and 0.7 km. Each cell is charged with high traffic generated by 16 users per active timeslot per cell (48 simultaneous users per base element). The three criteria differ to each other only for the different choice of the sectors among the three cells. All the three choices are for achieving minimum interferences. Multi-User Detection (MUD) and Zero Forcing - Block Decision Feedback Equaliser (ZF-BDFE) are implemented in the receiver. **Figures 24, 25** and **26** give three "photographs" of the user positions at the active timeslot according to the three studied allocation criteria, where clearly appears that in each cell the users are located inside a determined sector. The aim of simulations is not to evaluate the skill of an allocation criterion in respect to the others, but instead the one of giving an idea of the increasing of performances due to the application of the teaching of the invention.

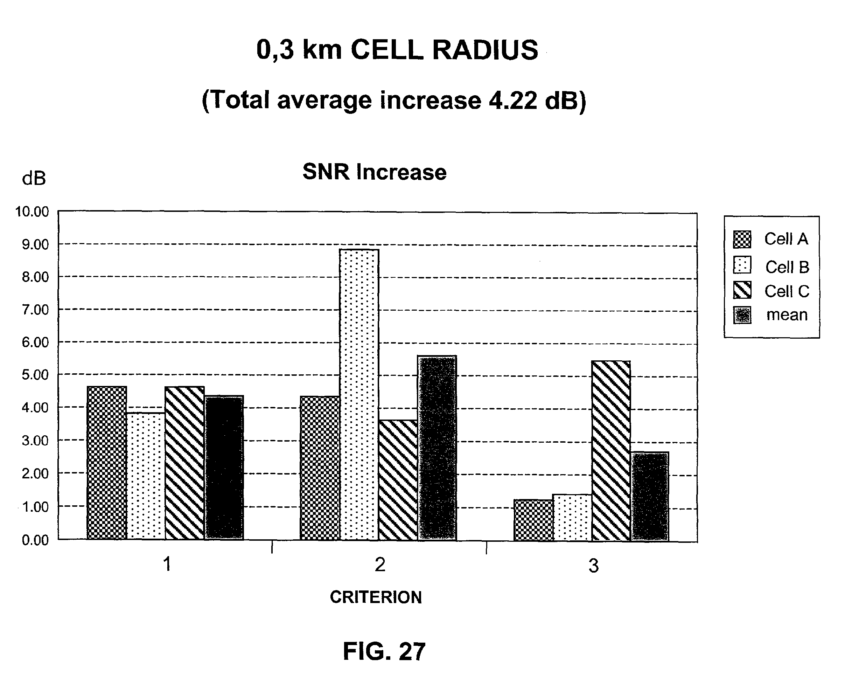

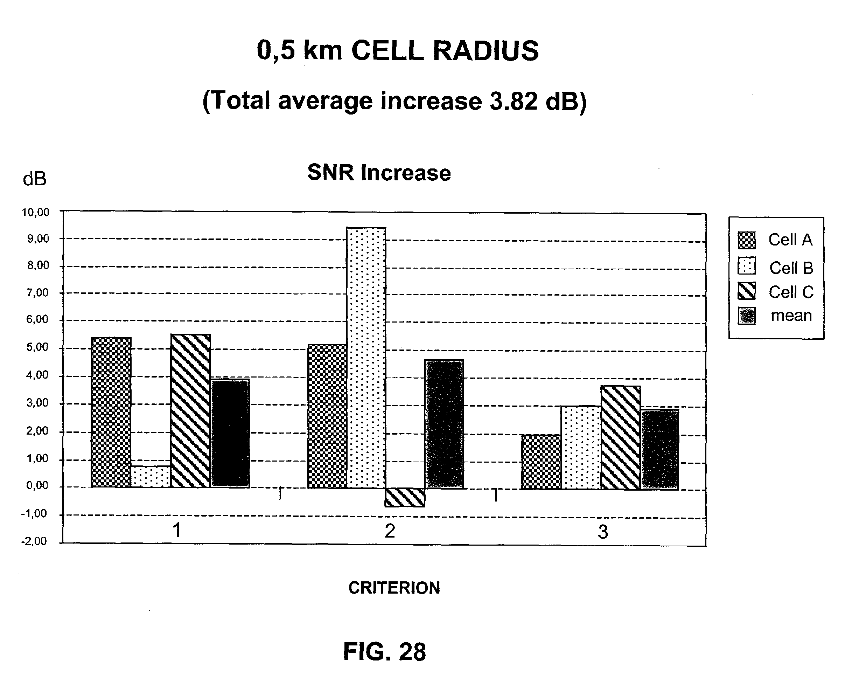

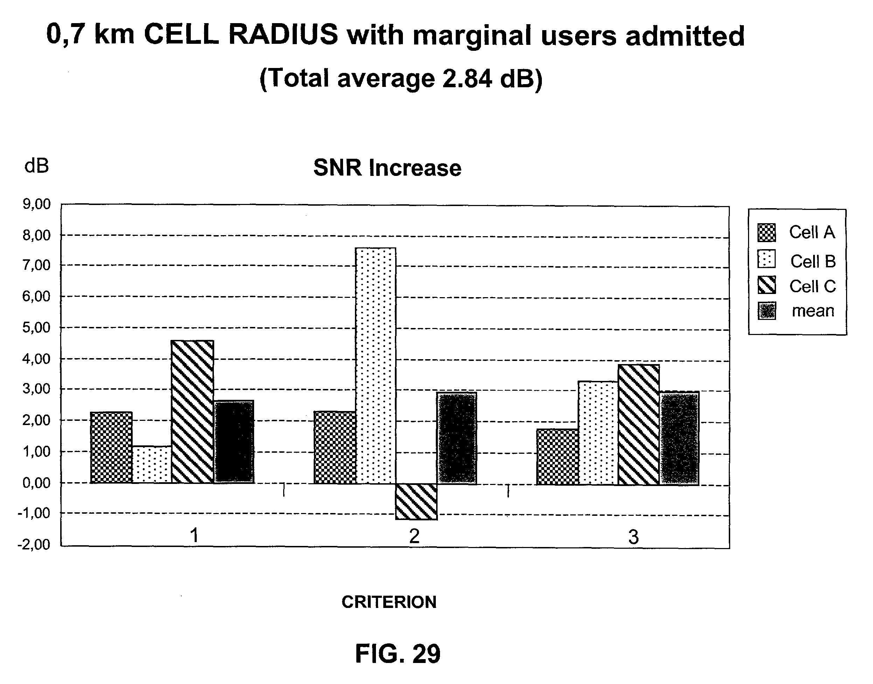

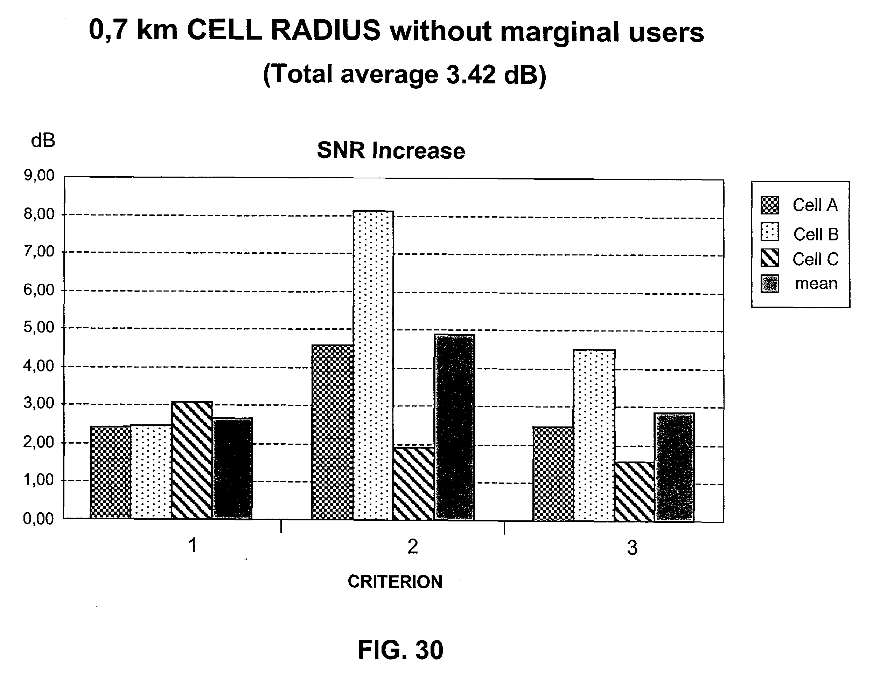

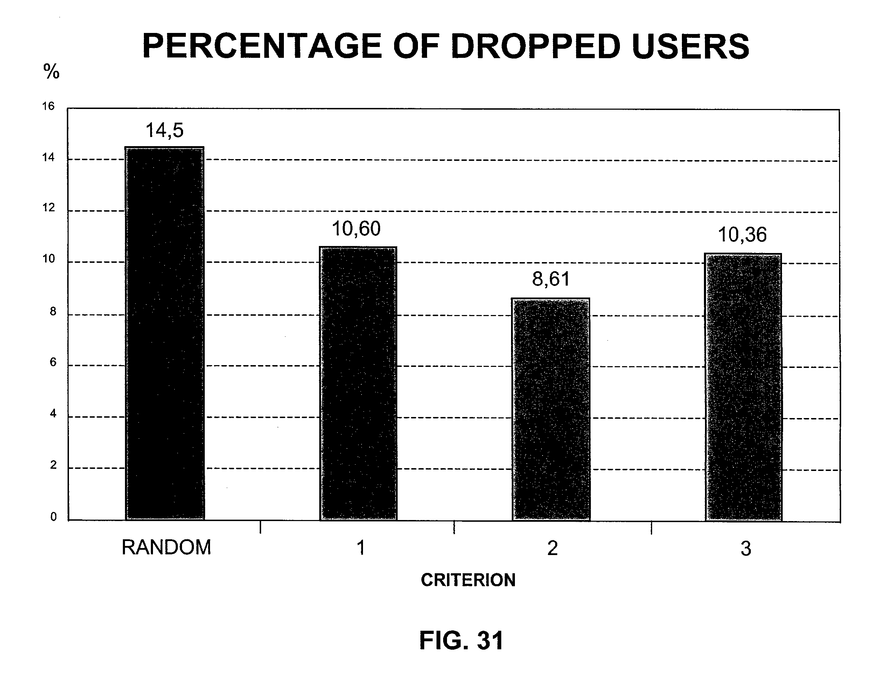

In **fig.27** the simulation results are depicted in form of histograms relevant to Cell A, Cell B, and Cell C, all of 0.3 km radius, composing the hexagonal base element. Each histogram indicates dB of SNR (Signal-to-Noise Ratio) increase over the random case of **fig.23.** All the three allocation criteria are considered, and for each criterion a fourth histogram is added for indicating the average of the three. The average calculated on all the three criteria is 4.22 dB. **Fig.28** is similar to the preceding Figure but relevant to cells of 0.5 km radius; the total average increase is 3.82 dB. All the users of cells with 0.3 or 0.5 km radius are supposed to have enough power for connecting to the BTS, while in the case of 0.7 km radius not all the users will have enough power. **Figures 29** and **30** are devoted to the case of cells with 0.7 km radius. In **fig.29** the case is considered where the users to be dropped are maintained and transmit with the maximum available power, constituting a great source of interference for the remaining users. Nonetheless the total average increase is only 2.84 dB. **Fig.30** differs from the preceding one because the access to the network is denied to the marginal users; in this case the total average increases to 3.42 dB. In the end, **fig.31** shows the percentage of dropped users for the three allocation criteria and for the random case. It can be noticed that, in the best case, there is near 6% reduction of dropped users with respect to the random case. In the worst case there is near 4% reduction. In both cases, due to the remarkable reduction of dropped (not admitted) users, the availability of the network is increased by using the method of the invention.

## Claims

1. Radio resource management method in a cellular network including base stations connected to pools of mobile stations by means of two-way communication channels assigned in time division for the duration of a time slot of a repetitive frame or subframe, and the base stations exploiting directive antennas able to cut out the gain for sectoring the cells and measuring the directions of arrival of signals transmitted by the mobile stations, **characterised in that** includes the following steps executed by the network:
a) planning the receptions and transmissions by allocating the available timeslots to sectors of the cells not overlapping, as far as possible, the sectors of adjacent or superimposed cells during a same active timeslot;
b) allocating the same active timeslot also to the mobile stations the direction of arrival of whose signals best match with the directions of the relevant sectors.

2. The radio resource management method of the preceding claim, **characterised in that** the planning step a) includes the step of defining a base element including one or more frame synchronised cells and respective sectors to be replicated into adjacent elements for building up the network,.

3. The radio resource management method of the preceding claim, **characterised in that** the number of allocable timeslots is greater than or equal to the number N of sectors per cell and each sector of the base element is activated at least one time during one temporal frame or subframe.

4. The radio resource management method of the preceding claim, **characterised in that** the planning step a) includes the generation of a configuration table for said base element mapping in all, or in part, the possible allocations between cell/s, sectors, and timeslots.

5. The radio resource management method of the preceding claim, **characterised in that** the planning step a) includes the selection of an initial configuration into the table for said base element and the generation of spatial functions defining the configurations of all the adjacent elements in order to achieve maximum interference rejection.

6. The radio resource management method of the preceding claim, **characterised in that** each spatial function has an inverse function associated to the opposite adjacent element.

7. The radio resource management method of the preceding claim, **characterised in that** said configuration table includes a number of consecutive configurations equal to the number of timeslots and said spatial functions are generated by means of one or more jumps between backwards or afterwards configurations

8. The radio resource management method of any claims from 2 to 7, **characterised in that** said base element is build up according to at least the following alternatives:
i- one polygonal centre-excited cell subdivided in N-sectors;
ii- one polygonal corner-excited cells subdivided in N-sectors;
iii- three hexagonal corner-excited cells fully non-overlapping and excited at the same point and each cell being subdivided in N-sectors;
iv- one hexagon subdivided in three identical rhomboidal cells excited on the vertex not in common with the adjacent cells and each cell being subdivided in N-sectors.

9. The radio resource management method of one of the preceding claims, **characterised in that** the allocating step b) includes the allocation of possible intercell users as far as possible far away from the base station in order to increase the path loss related to interfering signals.
